(19)

**Europäisches Patentamt**
**European Patent Office**
**Office européen des brevets**

(11) **EP 4 389 780 A1**

(12) **EUROPEAN PATENT APPLICATION**

(43) Date of publication:
26.06.2024 Bulletin 2024/26

(21) Application number: 22214654.0

(22) Date of filing: 19.12.2022

(51) International Patent Classification (IPC):
**C08F 8/50** (2006.01)     **C08L 23/04** (2006.01)
**C08L 23/08** (2006.01)     **C08L 23/26** (2006.01)

(52) Cooperative Patent Classification (CPC):
(C-Sets available)
**C08L 23/04; C08F 8/50; C08L 23/0815;**
C08L 2023/42; C08L 2203/16; C08L 2207/20

(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Basell Polyolefine GmbH**
**50389 Wesseling (DE)**

(72) Inventors:
• **MAUS, Andreas**
**60431 Frankfurt (DE)**
• **HEES, Timo**
**55116 Mainz (DE)**
• **REBMANN, Pascal**
**53117 Bonn (DE)**

(74) Representative: **LyondellBasell**
**c/o Basell Poliolefine Italia**
**Intellectual Property**
**P.le Donegani 12**
**44122 Ferrara (IT)**

(54) **PROCESS FOR OBTAINING A POLYETHYLENE HAVING A REDUCED CONTENT OF GELS**

(57) A process for obtaining a polyethylene having a reduced content of gels, comprising subjecting to thermal visbreaking a polyethylene (I) having ER values from 1 to 8 and MIE values from 0.1 to 5 g/10 min.

EP 4 389 780 A1

(52) Cooperative Patent Classification (CPC): (Cont.)

C-Sets
**C08L 23/04, C08L 23/0815;**
**C08L 23/0815, C08L 23/04**

**Description**

FIELD OF THE INVENTION

The present disclosure provides a process for obtaining a polyethylene having a reduced content of gels, comprising a thermal visbreaking step.

BACKGROUND OF THE INVENTION

Polyethylene is generally considered to be the most widely used thermoplastic polymer material.

In fact it is used to prepare an extremely large variety of extruded, injection molded and blow molded articles, ranging for example from packaging articles, in particular films and sheets, to shopping bags, bottles, containers, pipes and automotive components.

However, in order to obtain optimal mechanical and optical properties in such applications, a decisive role is played by the polymer homogeneity.

In fact polyethylene often has a broad molecular weight distribution, so that it can be seen as a blend of fractions having different molecular weights. It can also contain fractions having different composition, in particular different kinds and amounts of comonomers.

Such complexity in molecular weights and composition can easily impair the polymer homogeneity, due to the formation of separate domains, commonly called "gels", with consequent worsening of mechanical and optical properties.

The gels, also called "specks" or "white spots", are predominantly high-molecular-weight, high-viscosity particles in a low-viscosity matrix.

Moreover, a particularly advantageous source of polyethylene is presently represented by polyethylene recyclate, mainly coming from differential recovery of post-consumer and/or industrial plastic waste.

Such polyethylene recyclate, obtained by separation from waste streams, has rather heterogeneous and variable composition, with consequent occurrence of particularly high amounts of gels.

Thus there is a constant need for efficient methods able to provide a polyethylene having a reduced content of gels, in particular of large gels.

According to WO2017001384A1 and WO2018096016A1, the gel content is reduced by melt processing the polyethylene in the presence of organic peroxides.

According to US 2935502, the gel content is reduced by heating the polyethylene to a temperature above about 100° C, preferably from about 100° C to about 300°C, under a pressure of above about 7,500 p.s.i. and extruding the molten polyethylene through a fine channel or capillary.

It has now been found that a polyethylene with a reduced content of gels can be efficiently obtained by thermally visbreaking a polyethylene having specific properties, without using peroxides and without having to operate at high pressure.

SUMMARY OF THE INVENTION

The present disclosure provides a process for obtaining a polyethylene having a reduced content of gels, said process comprising subjecting to thermal visbreaking a polyethylene (I) having ER values from 1 to 8, preferably from 2 to 6, and MIE values from 0.1 to 5 g/10 min., thereby obtaining a processed polyethylene (II) having a MIE/ER ratio from 0.2 to 2.44, preferably from 0.2 to 2.40;
where ER is calculated from:

$$ER = (1.781 * 10^{-3}) * G'$$

at a value of G"= 0.5 kPa (5,000 dyn/cm$^2$);
wherein:

G' = storage-modulus;
G" = loss-modulus;
both G' and G" being measured with dynamic oscillatory shear in a plate-plate rotational rheometer at a temperature of 190°C;
MIE is the melt flow index at 190°C with a load of 2.16 kg, determined according to ISO 1133-2:2011.

The processed polyethylene (II) so obtained has valuable mechanical and optical properties, in combination with a high melt strength, as shown in the Rheotens test by the high values of force F(max) required to tear the strand.

DETAILED DESCRIPTION OF THE INVENTION

The expression "polyethylene" is used herein to embrace, as alternatives, both a single ethylene polymer and a polyethylene composition, i.e. a composition comprising two or more ethylene polymers.

As shown in the examples, the thermal visbreaking has the effect of decreasing the ER value while increasing the melt flow index value, so that, by subjecting to thermal visbreaking the polyethylene (I) having the ER values defined above, the said MIE/ER ratio from 0.2 to 2.44, preferably from 0.2 to 2.40, is obtained.

Particularly preferred MIE/ER ratio values are:

- from 0.3 to 2.44; or
- from 0.3 to 2.40; or
- from 0.2 to 2.35; or
- from 0.3 to 2.3 5.

Preferably, the ratio MIE (II)/MIE (I) between the MIE of the processed polyethylene (II) and the MIE of the polyethylene (I) is equal to or higher than 1.2, preferably equal to or higher than 1.5, in particular from 1.2 to 15 or from 1.2 to 10, or from 1.5 to 15, or from 1.5 to 10.

Particularly preferred is a MIE (II)/MIE (I) ratio from 1.2 to 6.0, in particular from 1.5 to 5.5.

The polyethylene (I) used in the present process can consist of or comprise virgin polyethylene or can consist of or comprise recyclate polyethylene.

The polyethylene (I) can also consist of or comprise a blend of virgin polyethylene and recyclate polyethylene.

The expression "virgin polyethylene" means that it has not been subjected to any process for production of finished articles, for instance packaging films, pipes, bottles, containers, or semi-finished articles, like fibers or sheets for thermoforming.

Thus the virgin polyethylene has not been subjected to post-processing, except for possible pelletization, which is still considered part of the polymer production process.

The expression "recyclate polyethylene" as used herein, means post-consumer recycled ("PCR") polyethylene and/or post-industrial recycled ("PIR") polyethylene. PCR polyethylene is derived from an end product that has completed its life cycle as a consumer item and would otherwise be disposed of as waste (e.g., a polyethylene water bottle). PIR polyethylene is derived from plastic scrap that is generated as waste from an industrial process. PCR polyolefins include polyolefins that have been collected in commercial and residential recycling programs, including flexible packaging (cast film, blown film and BOPP film), rigid packaging, blow molded bottles, and injection molded containers.

Hence, in general terms, the recyclate polyethylene is a material deriving from an article manufacturing process.

Usually, through a step of separation from other polymers, such as PVC, PET or PS, two main polyolefinic fractions are obtained, namely the recyclate polyethylene (including HDPE, MDPE, LDPE, and LLDPE) and recyclate polypropylene (including homopolymers, random copolymers, and heterophasic copolymers).

However the recyclate polyethylene can still comprise significant amounts, even high amounts of other polymers, like those specified above, including also polypropylene.

Other polymers and in general other materials, like for instance fillers, can also be present.

Preferably the polyethylene (I) comprises at least 70% by weight of ethylene polymers, more preferably at least 80% by weight of ethylene polymers, most preferably at least 90% by weight of ethylene polymers, the preferred upper limit being of 100% by weight of ethylene polymers in all cases. Said amounts are referred to the total weight of the unprocessed polyethylene (I).

A particularly preferred ethylene polymer is LDPE.

"LDPE," as used herein, means ethylene homopolymers and ethylene copolymers produced in a radical polymerization.

The polymerization is generally carried under high pressure, as hereinafter explained in detail.

Examples of LDPE copolymers include ethylene-vinyl acetate copolymers, ethylene-vinyl alcohol copolymers, ethylene-acrylate copolymers, ethylene-methacrylate copolymers, ethylene-$\alpha$-olefin copolymers and mixtures thereof.

Suitable examples of $\alpha$-olefin comonomers in the LDPE copolymers include $C_3$-$C_{10}$ $\alpha$-olefins, such as propylene, 1-butene, 1-hexene, 1-octene and mixtures thereof.

When present, comonomers can be present in amounts up to 15% by weight, 10% by weight or 5% by weight with respect to the total weight of the copolymer.

In general, the term "copolymer" is meant to include also polymers containing more than one kind of comonomers, such as terpolymers.

Preferably, the density of LDPE is from 0.910 to 0.940 g/cm³, more preferably from 0.915 to 0.935 g/cm³, determined according to ISO 1183-1:2012 at 23°C.

There are two basic high pressure polymerization processes for the manufacture of LDPE: autoclave and tubular.

The LDPE made by the autoclave reactor process ("autoclave LDPE") has a high concentration of long chain branches, resulting into high values of elongational hardening, and a relatively broad molecular weight distribution that make it easy to process.

The autoclave polymerization is generally carried out in the presence of radical initiating agents selected from organic peroxides.

The tubular reactor process does not necessarily require the use of organic peroxides. It can be carried out by using oxygen alone as the radical initiating agent, thus allowing to prepare a LDPE which is free from the products of chemical degradation of organic peroxides.

The said LDPE can also be prepared with a mixed process combining both autoclave and tubular reactors.

Process operating conditions can include, but are not limited to, a pressure in the range of from 70 MPa to 700 MPa, preferably from 140 to 190 MPa, and a temperature in the range of from 150°C to 500°C, preferably from 150°C to 320°C.

The polymerization gas can optionally comprise one or more chain transfer agents known in the art, such as propylene, propane and propionic aldehyde.

Such chain transfer agents are used to regulate the molecular weights.

The said processes and the resulting LDPE product are well known in the art. For instance, US patent. No. 3,691,145 and US patent application No. 2010/0076160 teach producing LDPE in a tubular reactor process.

LDPE can be present in polyethylene (I) in amounts equal to or higher than 35% by weight, preferably equal to or higher than 45% by weight, with respect to the total weight of polyethylene (I). The upper limit of LDPE amount in polyethylene (I) can in all cases be of 70% by weight, or 80% by weight, or 90% by weight, or 100% by weight, with respect to the total weight of polyethylene (I).

Virgin LDPE polymers having the characteristics quoted above are known in the art. Specific examples are the polymers commercially available with the brand names Lupolen (LyondellBasell) and Petrothene (Equistar).

Recyclate polyethylene materials comprising LDPE having the characteristics quoted above are known in the art as well. Specific examples are polyethylene compositions commercially available with the brand name Nextfilm (Suez).

The polyethylene (I) can also consist of or, as previously mentioned, comprise one or more ethylene polymers different from LDPE, selected in particular from HDPE (High Density Polyethylene, typically having a density from 0.940 to 0.965 g/cm$^3$), MDPE (Medium Density Polyethylene, typically having a density from 0.926 to 0.940 g/cm$^3$), LLDPE (Linear Low Density Polyethylene, typically having a density 0.900 to 0.939 g/cm$^3$) and mixtures thereof.

They are ethylene homopolymers and ethylene copolymers containing $\alpha$-olefin monomer units (preferably in amounts up to 10% by weight) and their mixtures. Examples of the said $\alpha$-olefins monomer units are those having from 3 to 8 carbon atoms, in particular propylene, 1-butene, 1-pentene, 1-hexene, 1-octene and 4-methyl-1-pentene. 1-butene and 1-hexene are preferred.

Said homopolymers and copolymers can be obtained by way of polymerization processes in the presence of coordination catalysts. Said processes and the homopolymers and copolymers obtained from them are widely described in the art.

In particular it is possible to carry out the polymerization process in the presence of a Ziegler-Natta catalyst or single site catalyst.

As is well known, a Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on MgCl$_2$. Particularly preferred catalysts comprise the product of the reaction of said organometallic compound of group 1, 2 or 13 of the Periodic Table of elements, with a solid catalyst component comprising a Ti compound supported on MgCl$_2$.

Preferred organometallic compounds are the organo-Al compounds.

The single site catalysts are known in the art and are generally selected from metallocene and non-metallocene single site catalysts.

Examples of metallocene single site catalysts are zirconocenes and hafnocenes, for instance cyclopentadienyl or indenyl complexes of zirconium or hafnium, like bis (cyclopentadienyl) zirconium dichloride; bis (indenyl) zirconium dichloride or bis (indenyl) hafnium dichloride.

Examples of non-metallocene single site catalysts are iron complex compounds preferably having a tridentate ligand.

An example of high density recyclate polyethylene having the characteristics quoted above is CirculenRecover® 5603 grey (LyondellBasell).

Preferably, the polyethylene (I) has one or more of the following features:

- density from 0.910 to 0.960 g/cm$^3$, more preferably from 0.910 to 0.950 g/cm$^3$, in particular from 0.910 to 0.940 g/cm$^3$, or from 0.915 to 0.935 g/cm$^3$;
- MIP from 1 to 10 g/10 min., where MIP is the melt flow index at 190°C with a load of 5 kg, determined according to ISO 1133-2:2011;
- a MIP/MIE ratio from 2 to 10;
- Mw from 80,000 to 350,000 g/mol.;
- a Mw/Mn ratio from 3 to 20 or from 4 to 15:

wherein Mw is the weight average molecular weight and Mn is the number average molecular weight, both measured by GPC (Gel Permeation Chromatography).

Preferably, the processed polyethylene (II) has one or more of the following features:

- density from 0.910 to 0.960 g/cm$^3$, more preferably from 0.910 to 0.950 g/cm$^3$, in particular from 0.910 to 0.940 g/cm$^3$, or from 0.915 to 0.935 g/cm$^3$;
- MIP from 5 to 20 g/10 min.;
- MIE from 1 to 10 g/10 min.;
- a MIP/MIE ratio from 1.5 to 8;
- Mw from 50,000 to 250,000 g/mol.;
- a Mw/Mn ratio from 3 to 20 or from 4 to 15;
- ER from 0.8 to 6, preferably from 1 to 5;
- total amount of gels/m$^2$ of less than 150000, more preferably of less than 100000, most preferably of less than 80000;
- amount of gels/m$^2$ having gel diameter of higher than 600 $\mu$m of less than 20.

The details of the test methods are given in the examples.

Thermal visbreaking includes a treatment of the polyethylene (I) at temperature and/or mechanical shear energy sufficient to cause polymer chain scission to predominate of polymer chain branching or crosslinking.

In some embodiments, the thermal visbreaking is carried out by heating the polyethylene (I) at a temperature equal to or greater than 280°C, preferably at a temperature equal to or greater than 290°C, more preferably at a temperature equal to or greater than 300°C, most preferably at a temperature equal to or greater than 310°C, the preferred upper limit being of 500°C in all cases.

In particular, the thermal visbreaking can be carried out at the following temperatures:

- from 280°C to 500°C; or
- from 290°C to 500°C; or
- from 300°C to 500°C; or
- from 310°C to 500°C; or
- from 280°C to 480°C; or
- from 290°C to 480°C; or
- from 300°C to 480°C; or
- from 310°C to 480°C; or
- from 280°C to 460°C; or
- from 290°C to 460°C; or
- from 300°C to 460°C; or
- from 310°C to 460°C.

In some embodiments, thermal visbreaking is carried out in the absence of or substantially in the absence of oxygen, wherein substantial absence of oxygen means less than or equal to 1.0% by weight, less than or equal to 0.10% by weight, or less than or equal to 0.01% by weight, based on the total weight of polymer in the thermal visbreaking zone.

It is known that thermal visbreaking can be run in the conventional mixing apparatuses generally used for processing polymers in the molten state.

In particular, the processed polyethylene (II) of the present disclosure can be prepared by processing the polyethylene (I) in an extruder device. Suitable extruder devices are extruders or continuous mixers. These extruders or mixers can be single- or two-stage machines which melt and homogenize the polyethylene. Examples of extruders are pin-type extruders, planetary extruders or corotating disk processors. Other possibilities are combinations of mixers with discharge screws and/or gear pumps. Preferred extruders are screw extruders and in particular extruders constructed as twin-screw machine. Particular preference is given to twin-screw extruders and continuous mixers with discharge elements and especially to continuous mixers with counter rotating twin rotor or the extruder device comprises at least one co-rotating twin screw extruder. Machinery of this type is conventional in the plastics industry and is manufactured by, for example, Leistritz Extrusionstechnik GmbH, Nuremberg, Germany; Coperion GmbH, Stuttgart, Germany; KraussMaffei Berstorff GmbH, Hannover, Germany; The Japan Steel Works LTD., Tokyo, Japan; Farrel Corporation, Ansonia, USA; or Kobe Steel, Ltd., Kobe, Japan. Suitable extruder devices are further usually equipped with units for pelletizing the melt, such as underwater pelletizers.

As known by the technical expert, the extent of visbreaking, thus the increase of melt flow index in the thermal visbreaking step, is mainly influenced by the temperature and by the specific energy input.

In an extruder device, the specific energy input (SEI) refers to the energy input that is mechanically applied to the melt through the rotation of the screws and which correlates to the power consumption of the motor.

It can be expressed in kWh/kg. The higher the temperature and/or the SEI value, the higher will be the melt flow index value resulting from the thermal visbreaking step.

Indicatively, the SEI value may range from 0.15 to 0.4 kWh/kg, preferably from 0.20 to 0.35 kWh/kg.

In addition, one or more additives can be fed to the processed polyethylene (II). Feeding of these additives may occur before, during or after thermal visbreaking.

Such additives are common in the art. Suitable types of additives for preparing polyethylene compositions are, for example, antioxidants, melt stabilizers, light stabilizers, acid scavengers, lubricants, processing aids, antiblocking agents, slip agents, antistatic agents, antifogging agents, pigments or dyes, nucleating agents, flame retardants or fillers. It is common that several additives are added. The multiple additives can be different types of additives. It is however also possible that several representatives of one type of additives are added to the low densitiy polyethylene. Additives of all these types are generally commercially available and are described, for example, in Hans Zweifel, Plastics Additives Handbook, 5th Edition, Munich, 2001.

In some embodiments, where antioxidant addition is used in conjunction with thermal visbreaking, the antioxidant is added after a substantial portion of the visbreaking reaction has taken place.

The present processed polyethylene (II) is particularly suited for use in applications where a good melt strength and homogeneity is required or desirable, like for preparing films, in particular cast or blown films.

Said films are prepared with processes well known in the art, in particular with extrusion processes.

To prepare the cast films by the extrusion process, the molten polymer material is forced through a long, thin, rectangular die. The extrudate is in the form of a film. The film is allowed to cool and then rolled up.

To prepare the blown films by the extrusion process, the molten polymer material is extruded through a circular die. The drawn extrudate is tubular, which expands by air to form tubular bubbles. The bubbles are allowed to cool and then are flattened and rolled up.

EXAMPLES

The practice and advantages of the various embodiments, compositions and methods as provided herein are disclosed below in the following examples. These Examples are illustrative only, and are not intended to limit the scope of the appended claims in any manner whatsoever.

The following analytical methods were used to characterize the polymer compositions.

**Melt flow index**

Determined according to ISO 1133-1 2012-03 at 190°C with the specified load.

## Density

Determined according to ISO 1183-1:2012 at 23°C.

## Cast Film Measurement

The Film measurement of gels was carried out on an OCS extruder type ME 202008-V3 with 20 mm screw diameter and a screw length of 25 D with a slit die width of 150 mm. The cast line is equipped with a chill roll and winder (model OCS CR-9). The optical equipment consists of a OSC film surface analyzer camera, model FTA-100 (flash camera system) with a resolution of 26 $\mu$m x 26 $\mu$m. After purging the resin first for 1 hour to stabilize the extrusion conditions, inspection and value recording take place for 30 minutes afterwards. The resin is extruded at 220°C with a take-off speed of ca. 2.7 m/min to generate a film with thickness 50 $\mu$m. The chill roll temperature was 70°C. The said inspection with the surface analyzer camera provided the total content of gels and the content of gels with diameter of higher than 600 $\mu$m, as reported in Table 1.

## Molecular Weight Distribution Determination

The determination of the means Mw and Mn and of Mw/Mn derived therefrom was carried out by high-temperature gel permeation chromatography using a method described in ISO 16014-1, -2, -4, issues of 2003. The specifics according to the mentioned ISO standards are as follows: Solvent 1,2,4-trichlorobenzene (TCB), temperature of apparatus and solutions 135°C and as concentration detector a PolymerChar (Valencia, Paterna 46980, Spain) IR-4 infrared detector, capable for use with TCB. A WATERS Alliance 2000 equipped with the following pre-column SHODEX UT-G and separation columns SHODEX UT 806 M (3x) and SHODEX UT 807 (Showa Denko Europe GmbH, Konrad-Zuse-Platz 4, 81829 Muenchen, Germany) connected in series was used.

The solvent was vacuum distilled under Nitrogen and was stabilized with 0.025% by weight of 2,6-di-tert-butyl-4-methylphenol. The flowrate used was 1 ml/min, the injection was 500$\mu$l and polymer concentration was in the range of 0.01% < conc. < 0.05% w/w. The molecular weight calibration was established by using monodisperse polystyrene (PS) standards from Polymer Laboratories (now Agilent Technologies, Herrenberger Str. 130, 71034 Boeblingen, Germany)) in the range from 580g/mol up to 11600000g/mol and additionally with Hexadecane.

The calibration curve was then adapted to Polyethylene (PE) by means of the Universal Calibration method (Benoit H., Rempp P. and Grubisic Z., & in J. Polymer Sci., Phys. Ed., 5, 753(1967)). The Mark-Houwing parameters used herefore were for PS: $k_{PS}$= 0.000121 dl/g, $\alpha_{PS}$=0.706 and for PE $k_{PE}$= 0.000406 dl/g, $\alpha_{PE}$=0.725, valid in TCB at 135°C. Data recording, calibration and calculation was carried out using NTGPC_Control_V6.02.03 and NTGPC_V6.4.24 (hs GmbH, Hauptstraße 36, D-55437 Ober-Hilbersheim, Germany) respectively.

## Complex shear viscosity $\eta_{0.02}$ (eta (0.02)) and ER

Measured at angular frequency of 0.02 rad/s and 190°C as follows.

Samples were melt-pressed for 4 min under 200 °C and 200 bar into plates of 1mm thickness. Disc specimens of a diameter of 25 mm were stamped and inserted in the rheometer, which was pre-heated at 190 °C. The measurement can be performed using any rotational rheometer commercially available. Here the Anton Paar MCR 300 was utilized, with a plate-plate geometry. A so-called frequency-sweep is performed (after 4 min of annealing the sample at the measurement temperature) at T = 190 °C, under constant strain-amplitude of 5%, measuring and analyzing the stress response of the material in the range of excitation frequencies $\omega$ from 628 to 0.02 rad/s. The standardized basic software is utilized to calculate the rheological properties, i.e. the storage-modulus, G', the loss-modulus, G", the phase lag $\delta$ (=arctan(G"/G')) and the complex viscosity, $\eta^*$, as a function of the applied frequency, namely $\eta^*(\omega) = [G'(\omega)^2 + G''(\omega)^2]^{1/2}/\omega$. The value of the latter at an applied frequency $\omega$ of 0.02 rad/s is the $\eta_{0.02}$.

ER is determined by the method of R. Shroff and H. Mavridis, "New Measures of Polydispersity from Rheological Data on Polymer Melts," J. Applied Polymer Science 57 (1995) 1605 (see also U.S. Pat. No. 5,534,472 at Column 10, lines 20-30). It is calculated from:

$$ER = (1.781 * 10^{-3}) * G'$$

at a value of G"=5,000 dyn/cm$^2$.

As those skilled in the art will recognize, when the lowest G" value is greater than 5,000 dyn/cm$^2$, the determination of ER involves extrapolation. The ER values calculated then will depend on the degree on nonlinearity in the log G' versus log G" plot. The temperature, plate diameter and frequency range are selected such that, within the resolution of the rheometer, the lowest G" value is close to or less than 5,000 dyn/cm$^2$.

## Comonomer content

The comonomer content was determined by means of IR in accordance with ASTM D 6248 98, using an FT-IR spectrometer Tensor 27 from Bruker.

## Melt strength

Melt strength of a polymer is an important parameter in melt processing operations where stretching or drawing is involved at one or more stages in the process. It depends on molecular parameters like e.g. molecular weight, molecular weight distribution and/or polymer branches. The test device measures the extensional properties of polymer melts by drawing a vertical melt strand under constant force in the Rheotens spinline, which is located underneath the capillary die, at either constant pull-off speed or with a linear accelerating velocity.

Melt Strength analysis was carried out at 190°C on a Göttfert Rheotester 1000 (12 mm Barrel diameter, Capillary die LID = 20/2), equipped with a RHEOTENS 71.97 device. The RHEOTENS consists of two upper and two lower driven, counter rotating wheels that are connected to a very sensitive balance-system. The vertical gap between the wheels was 0.3 mm. After 10 min. melting time, the polymer was extruded with a shear rate of 50 1/s. The polymer strand leaves the capillary die and the die-exit velocity $v_0$ is recorded. At a strand length of 74 mm the upper two wheels pull the melt strand downwards with an acceleration of 2.4 mm/s$^2$ and the velocity v is recorded (the lower two wheels are only for additionally stabilizing the strand during drawdown). The drawdown ratio $\lambda$ = v/$v_0$ at break, the velocity at break, and the force at break of the melt strand (F(max) = Melt Strength) are recorded.

## SEI

As those skilled in the art will know, there are different ways to calculate the specific energy input SEI. SEI can be calculated by division of the motor power by the material flow. Motor power is equal to the torque multiplied with the angular velocity. The equation for the SEI is as follows:

$$SEI = \frac{2 \cdot \pi \cdot n \cdot M_D}{\dot{m}}$$

Here, $2 * \pi * n$ represents the angular velocity $\omega$, $M_D$ stands for the torque and $\dot{m}$ represents the material flow. When the torque of the motor cannot be directly measured, SEI can also be calculated approximately according to the following equation using the maximum and the actual current of the motor.

$$SEI = P_{max} * \frac{n_{actual}}{n_{max}} * \frac{I_{actual}}{I_{max}} * \frac{\eta_{transmission}}{\dot{m}}$$

Here, n represents the speed of the screws, I stands for the current and $\eta_{transmission}$ is the efficiency of the transmission.

Example 1

The commercial grade Nextfilm® T 800, sold by Suez, was used as polyethylene (I).

Nextfilm® is a recyclate LDPE, substantially made of 50% by weight of LDPE and 50% by weight of LLDPE, having the properties reported in Table 1, where it is identified as T 800.

The processed polyethylene (II) of the example was obtained by extruding the polyethylene (I) in an extruder Leistritz ZSE 27MAXX. The machine parameters were:

- Rotation speed: 700 rpm;
- Throughput: 30 kg/h;
- Temperatures:
  Zone 1: 300°C, Zone 2: 320°C, Zone 3-10: 340°C, Die: 300°C;
- SEI: 0.30 kWh/kg.

Under said conditions a thermal visbreaking occurred. The properties of the so obtained polyethylene (II) are reported in Table 1.

Table 1

|  | T 800 | Ex. 1* |
|---|---|---|
| MIP [g/10 min] | 4.27 | 10.2 |
| MIE [g/10 min] | 1.35 | 3.81 |
| Density [g/cm$^3$] | 0.925 | 0.919 |
| Mw [g/mol] | 127710 | 83966 |
| Mw/Mn | 5.9 | 7.0 |
| MIP/MIE | 3.2 | 2.7 |
| ER | 2.5 | 1.7 |
| MIE/ER | 0.54 | 2.2 |
| Sum Gels/m$^2$ total | 199548 | 58010 |
| Sum Gels/m$^2$ > 600 μm | 47 | 1 |
| F(max) [N] | 0.078 | 0.062 |
| *Polyethylene (II) | | |

The data reported in Table 1 show that the present process allows to provide a polyethylene having substantially reduced gel content, while maintaining a high melt strength, as demonstrated by the high F(max) value.

Example 2

The commercial recyclate polyethylene CirculenRecover® 5603 grey was used as polyethylene (I) and subjected to thermal visbreaking under the same conditions as reported in Example 1.

The properties of said polyethylene (I) are reported in Table 2, wherein it is identified as CR 5603, together with the properties of the so obtained polyethylene (II) of the example.

Table 2

|  | CR 5603 | Ex. 2* |
|---|---|---|
| MIE [g/10 min] | 0.4 | 1.98 |
| MIP [g/10 min] | 1.88 | 7.22 |
| Density [g/cm$^3$] | 0.956 | 0.9588 |
| ER | 4.91 | 2.82 |
| MIE/ER | 0.08 | 0.7 |
| Sum Gels/m$^2$ total | 217300 | 136581 |
| Sum Gels/m$^2$ 301-700 $\mu$m | 4517 | 2124 |
| Sum Gels/m$^2$ 701-1500 $\mu$m | 132 | 10 |
| Sum Gels/m$^2$ > 1500 $\mu$m | 0 | 0 |
| *Polyethylene (II) | | |

**Claims**

1. A process for obtaining a polyethylene having a reduced content of gels, said process comprising subjecting to thermal visbreaking a polyethylene (I) having ER values from 1 to 8, preferably from 2 to 6, and MIE values from 0.1 to 5 g/10 min., thereby obtaining a processed polyethylene (II) having a MIE/ER ratio from 0.2 to 2.44, preferably from 0.2 to 2.40; where ER is calculated from:

$$ER = (1.781*10^{-3})*G'$$

at a value of G"= 0.5 kPa (5,000 dyn/cm$^2$); wherein:

   G' = storage-modulus;
   G" = loss-modulus;
   both G' and G" being measured with dynamic oscillatory shear in a plate-plate rotational rheometer at a temperature of 190°C;
   MIE is the melt flow index at 190°C with a load of 2.16 kg, determined according to ISO 1133-2:2011.

2. The process of claim 1, wherein the polyethylene (I) consist of or comprises recyclate polyethylene.

3. The process of claim 1 or 2, wherein the ratio MIE (II)/MIE (I) between the MIE of the processed polyethylene (II) and the MIE of the polyethylene (I) is equal to or higher than 1.2, preferably equal to or higher than 1.5.

4. The process of claim 1 or 2, wherein the thermal visbreaking is carried out by heating the polyethylene (I) at a temperature equal to or greater than 280°C, preferably at a temperature equal to or greater than 290°C, more preferably at a temperature equal to or greater than 300°C, most preferably at a temperature equal to or greater than 310°C.

5. The process of claim 1 or 2, wherein the thermal visbreaking is carried out in an extruder device.

6. The process of claim 1 or 2, wherein the polyethylene (I) has at least one of the following additional features:

   - density from 0.910 to 0.960 g/cm$^3$, more preferably from 0.910 to 0.950 g/cm$^3$, in particular from 0.910 to 0.940 g/cm$^3$, or from 0.915 to 0.935 g/cm$^3$;
   - MIP from 1 to 10 g/10 min., where MIP is the melt flow index at 190°C with a load of 5 kg, determined according to ISO 1133-2:2011;
   - a MIP/MIE ratio from 2 to 10;
   - Mw from 80,000 to 350,000 g/mol.;
   - a Mw/Mn ratio from 3 to 20 or from 4 to 15;

wherein Mw is the weight average molecular weight and Mn is the number average molecular weight, both measured by GPC (Gel Permeation Chromatography).

7. The process of claim 1 or 2, wherein the polyethylene (I) comprises a LDPE.

8. The process of claim 1 or 2, wherein the polyethylene (I) comprises one or more polyethylene components selected from HDPE, MDPE, LLDPE and mixtures thereof.

9. A polyethylene obtainable by the process of claim 1 or 2.

10. A manufactured article comprising polyethylene of claim 9.

11. The manufactured article of claim 10, in form of a film.

Europäisches
Patentamt

European
Patent Office

Office européen
des brevets

# EUROPEAN SEARCH REPORT

Application Number

EP 22 21 4654

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 450 127 A1 (BASELL POLYOLEFINE GMBH [DE]) 6 March 2019 (2019-03-06) * claims 1,12,13 * * page 12; examples 2, Comp. Ex. 2; table 2 * * paragraphs [0001], [0007], [0019], [0020], [0065], [0071], [0087] * | 1-11 | INV. C08F8/50 C08L23/04 C08L23/08 C08L23/26 |
| A,D | WO 2018/096016 A1 (SABIC GLOBAL TECHNOLOGIES BV [NL]) 31 May 2018 (2018-05-31) * the whole document * | 1-11 | |
| A | EP 3 235 833 A1 (BOREALIS AG [AT]) 25 October 2017 (2017-10-25) * claims 1,13 * * page 16 - page 19; examples; tables 1-3 * | 1-11 | |
| A | WO 2022/133008 A1 (EASTMAN CHEM CO [US]) 23 June 2022 (2022-06-23) * page 68; example PCR PE; table 1 * * claims 1,2,16,18,19 * | 1-11 | TECHNICAL FIELDS SEARCHED (IPC) C08F C08L C08J |

The present search report has been drawn up for all claims

| Place of search | Date of completion of the search | Examiner |
|---|---|---|
| Munich | 20 April 2023 | Lippert, Sigrid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 4654

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2023

| Patent document cited in search report | | Publication date | Patent family member(s) | | Publication date |
|---|---|---|---|---|---|
| EP 3450127 | A1 | 06-03-2019 | BR 112020003500 | A2 | 01-09-2020 |
| | | | CN 111051029 | A | 21-04-2020 |
| | | | EP 3450127 | A1 | 06-03-2019 |
| | | | EP 3648939 | A1 | 13-05-2020 |
| | | | US 2020190267 | A1 | 18-06-2020 |
| | | | WO 2019043104 | A1 | 07-03-2019 |
| WO 2018096016 | A1 | 31-05-2018 | CN 109983066 | A | 05-07-2019 |
| | | | EP 3327077 | A1 | 30-05-2018 |
| | | | EP 3545030 | A1 | 02-10-2019 |
| | | | US 2019345274 | A1 | 14-11-2019 |
| | | | WO 2018096016 | A1 | 31-05-2018 |
| EP 3235833 | A1 | 25-10-2017 | CA 3021429 | A1 | 26-10-2017 |
| | | | CN 109153747 | A | 04-01-2019 |
| | | | EP 3235833 | A1 | 25-10-2017 |
| | | | ES 2710805 | T3 | 26-04-2019 |
| | | | IL 262525 | A | 31-12-2018 |
| | | | KR 20180136516 | A | 24-12-2018 |
| | | | PL 3235833 | T3 | 30-04-2019 |
| | | | PT 3235833 | T | 19-02-2019 |
| | | | RU 2018140734 | A | 22-05-2020 |
| | | | SA 518400218 | B1 | 11-01-2022 |
| | | | SG 11201808938U | A | 29-11-2018 |
| | | | US 2019136100 | A1 | 09-05-2019 |
| | | | US 2021024789 | A1 | 28-01-2021 |
| | | | WO 2017182636 | A1 | 26-10-2017 |
| WO 2022133008 | A1 | 23-06-2022 | WO 2022133008 | A1 | 23-06-2022 |
| | | | WO 2022133010 | A1 | 23-06-2022 |
| | | | WO 2022133014 | A1 | 23-06-2022 |
| | | | WO 2022133015 | A1 | 23-06-2022 |

EPO FORM P0459

For more details about this annex : see Official Journal of the European Patent Office, No. 12/82

## REFERENCES CITED IN THE DESCRIPTION

**Patent documents cited in the description**

- WO 2017001384 A1
- WO 2018096016 A1
- US 2935502 A
- US 3691145 A
- US 20100076160 A
- US 5534472 A

**Non-patent literature cited in the description**

- **HANS ZWEIFEL.** Plastics Additives Handbook. 2001
- **BENOIT H. ; REMPP P. ; GRUBISIC Z.** *J. Polymer Sci., Phys. Ed.,* 1967, vol. 5, 753
- **R. SHROFF ; H. MAVRIDIS.** New Measures of Polydispersity from Rheological Data on Polymer Melts. *J. Applied Polymer Science,* 1995, vol. 57, 1605